# EUROPEAN PATENT SPECIFICATION

(11) **EP 3 593 970 B1**
(45) Date of publication and mention of the grant of the patent: **08.06.2022**
(21) Application number: 19020423.0
(22) Date of filing: 09.07.2019
(51) Int. Cl.: B28B 15/00, B28B 23/00, B28C 9/00, C04B 20/02, C04B 28/02

(54) **PRODUCTION LINE FOR PLATES FOR INDOOR AND OUTDOOR FLOORING**
FERTIGUNGSLINIE FÜR PLATTEN FÜR INNEN- UND AUSSENBÖDEN
LIGNE DE PRODUCTION DE PLAQUES POUR REVÊTEMENT DE SOL INTÉRIEUR ET EXTÉRIEUR

(30) Priority: 11.07.2018 BG 406318
(43) Date of publication of application: 15.01.2020
(73) Proprietor: Andreevska - Djambazova, Evgenia Georgieva, 1527 Sofia (BG)
(72) Inventor: Andreevska - Djambazova, Evgenia Georgieva, 1527 Sofia (BG)
(74) Representative: Manev, Kostadin Chanev

(56) References cited:
- CA-A- 951 335
- US-A1- 2003 041 783
- US-A1- 2009 283 018
- CHEMICAL ABSTRACTS, 7 August 1989 (1989-08-07), XP000058121, ISSN: 0009-2258

## Description

### TECHNICAL FIELD

This utility model relates to a production line for glass plates for indoor and outdoor flooring, which will be used both in the glass waste processing industry and in the construction for the execution of construction and assembly works, on indoor and outdoor flooring.

### BACKGROUND OF THE UTILITY MODEL

The glass is made from readily available and relatively inexpensive raw materials - sand, limestone and sodium carbonate, which melt at about 1000 °C. There are two main types of glass - flat, for glazing, and glass for making containers.

Glass waste before re-use is first crushed in hammer, rotor or roller mills as well as jaw crushers. Glass waste used in the manufacture of containers is most often recycled by melting being previously sorted according to their color and use.

US2009283018A1 White Pozzolan Manufactured from Post-Consumer Waste Glass, Products Incorporating the Same and Methods of Manufacturing the Same is for a clean dry white glass powder useful as a substitute for Portland cement in concrete, in paints, and for other known uses for glass powder produced conventionally can be produced from unsorted post-consumer waste glass, including a substantial fraction of non-glass items, by employing glass pulverizing equipment to reduce waste glass to small fragments, allowing removal of trash, employing a multistep washing process to clean the glass fragments, in the preferred embodiment using aggregate cleaning equipment, drying the fragments, preferably using fluidized bed techniques, and grinding the glass to a desired particle size, preferably using a ball mill, in combination with an air classification step to produce a bright white glass powder of uniform particle size.

### SUMMARY OF THE UTILITY MODEL

The purpose of the utility model is to create a production line for glass plates for indoor and outdoor flooring to provide maximum utilization of flat glass waste, as well as production of glass plates with increased quality characteristics, suitable for interior flooring.

The problem is solved by creating a production line for glass plates for indoor and outdoor flooring which comprises a receiving hopper connected to a hammer mill, which is connected by conveyors in two directions to a first roll mill with a sieve, which is connected by conveyor with a second roll mill with a sieve.

The first roll mill with a sieve is connected by a conveyor to a hopper with a glass sand dispenser which is connected by a conveyor with a homogenizer. To the homogenizer by conveyors a water dispensing pump, a hopper with a cement dispenser and a hopper with a waterproofing additive dispenser are connected. The homogenizer is connected by conveyor to at least three sieves connected to the dryer.

The second roll mill with a sieve by conveyor is connected to a hopper with a glass flour dispenser which is connected by a conveyor with a second homogenizer. A second water dispensing pump, a hopper with a plaster dispenser, a second hopper with a cement dispenser, and second hopper with waterproofing additive dispenser 16 are connected to the second homogenizer by conveyors. The second homogenizer is connected by conveyors to at least three other sieves connected to a second dryer.

An advantage of the created production line for glass plates for indoor and outdoor flooring is that it provides for re-using of flat glass waste to obtain a construction product complying with the applicable construction norms.

Additionally, the production line has high-precision of the technology process, high throughput and efficiency while maintaining maximum reliability and security, and at the same time offering minimal opportunities for defective production and waste.

Glass plates for interior lining and outdoor pavement created through this production line are a construction product for direct application in the execution of construction and assembly works.

### BRIEF DESCRIPTION OF THE DRAWING

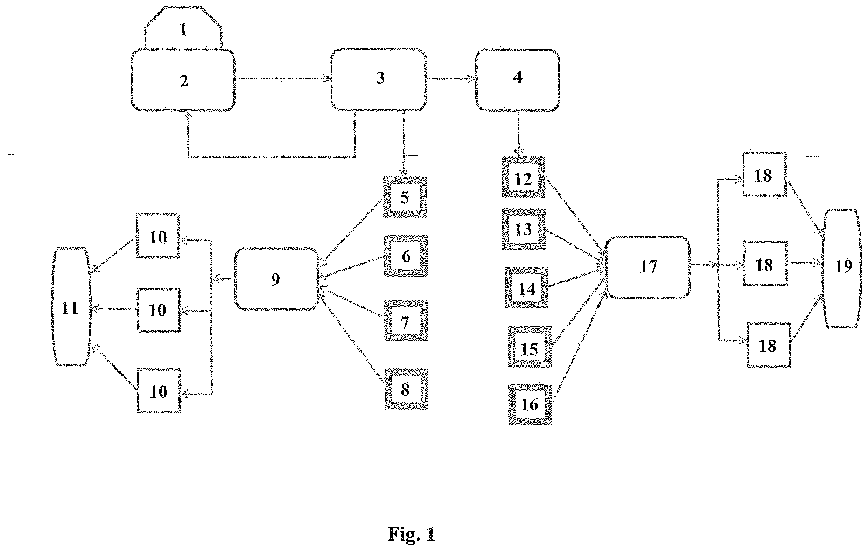

This utility model is illustrated in the appended figure 1, which is a schematic flow chart for the production of glass plates for indoor and outdoor flooring.

### DETAILED DESCRIPTION OF EMBODIMEMT OF THE UTILITY MODEL

The production line for glass plates for indoor and outdoor flooring shown in Figure 1 comprises a receiving hopper 1 connected to a hammer mill 2 which by means of conveyors is bi-directionally connected to a first roll mill with a sieve 3 which in turn by means of a conveyor is connected to a second roll mill with a sieve 4.

The hammer mill 2 performs the grinding of the flat glass by the impact of high-speed swinging hammers as well as the impact on the reflective plates of the material thrown by the hammers.

The roller mills 2 and 3 effect continuous grinding of the feed glass waste by crushing and grinding between two cylindrical shafts that are rotating opposite each other. The rotation speed may be the same or different. Smooth, jagged or longitudinally ribbed shafts are used. The final size of the shredded glass material is determined by the distance between the two shafts of the mill.

The first roll mill with sieve 3 through a conveyor is connected to a hopper with glass sand dispenser 5 which is connected by a conveyor to homogenizer 9. The homogenizer 9 by constantly stirring the components therein provides a uniform homogeneous product. To the homogenizer 9 there are connected by conveyor water dispensing pump 6, cement dispenser hopper 7 and hopper with waterproofing additive 8. The conveyor homogenizer 9 is connected to at least three sieves 10 connected to the dryer 11.

The second roll mill with sieve 4 through a conveyor is connected to a hopper with a glass flour dispenser 12 which is connected by a conveyor to second homogenizer 17. Second water dispensing pump 13, hopper with a plaster dispenser 14, second hopper with a cement dispenser 15 and second hopper with dispenser for the waterproofing additive 16 are connected to the homogenizer 17 by conveyors. The second homogenizer 17 by conveyors is connected to at least three other sieves 18 connected to the second dryer 19.

Conveyors used in the production line are made of rubber belt conveyors.

The established production line, according to the utility model, operates as follows.

Flat glass waste is placed in the receiving hopper 1 from where it enters the hammer mill 2 for crushing. The crushed particles of flat glass pass through the roller mills, by adjusting the distance between their shafts and by corresponding sieves a different size of the received particles is obtained - from 1mm to 1.5 mm for glass flour and from 1.5 mm to 4 mm for glass sand. All particles larger than 4 mm are returned to the first roll mill with a sieve where, together with a new amount of glass waste, they are re-grinded. The installation allows the production of homogeneous raw material for panels and plates for interior lining and homogeneous raw material for glass plates for outdoor pavement.

In the production of glass plates for outdoor pavement, the resulting glass sand, together with the corresponding amounts of water, cement, and waterproofing additive by means of respective conveyors, is introduced into the homogenizer 9, whereby said components are mixed to produce a homogeneous product. After mixing and homogenization, the resulting mixture is passed into moulds of different shapes which are placed on at least three vibrating sieves 10 to drain excess water and compact the structural composition thereof. The resulting products enter the dryer 11 where they are dried by forced ventilation and temperature up to 35 °C.

In the production of glass panels and inner lining plates, the resulting glass flour, together with corresponding dosages of water, gypsum, cement, and waterproofing additive by respective conveyors is introduced into the homogenizer 17, wherein the said components are mixed to produce a homogeneous product. After mixing and homogenization, the resulting mixture is passed into moulds of different shapes which are placed on at least three vibrating sieves 18 to drain excess water and compact the structural composition thereof. The resulting products enter the dryer 19 where they are dried by forced ventilation and temperature up to 35 °C.

## Claims

1. **Production line for glass plates for indoor and outdoor flooring,** comprises receiving hopper (1) connected to hammer mill (2), which by means of conveyors is bi-directionally connected to first roll mill with sieve (3), which in turn through a conveyor is connected to hopper with glass sand dispenser (5) which through a conveyor is connected to homogenizer (9) to which by conveyors water dispensing pump (6), hopper with cement dispenser (7) and hopper with waterproofing additive (8) are connected; the homogenizer (9) being connected by conveyors to at least three sieves (10), connected to drier (11), **characterized in that** the first roll mill with sieve (3) through a conveyor is connected to second roller mill with sieve (4) which in tum is connected by a conveyor to hopper with glass flour dispenser (12) which is connected by a conveyor with second homogenizer (17) to which second water dispensing pump (13), hopper with a plaster dispenser (14), second hopper with cement dispenser (15), second hopper with a waterproofing additive dispenser (16) are connected; the second homogenizer (17) by conveyors being connected to at least three other sieves (18) connected to second dryer (19).

## Patentansprüche

1. **Fertigungslinie für Glasplatten für Innen- und Außenbodenbelag,** bestehend aus Aufnahmebunker (1), verbunden mit einer Hammermühle (2), welche in den beiden Richtungen mittels Förderer mit der ersten Walzenmühle mit Sieb (3) verbunden ist, die ihrerseits durch Förderer mit einem Bunker mit Dosieranlage für Sand für Glas (5) verbunden ist, der durch Förderer mit einer Homogenisierungseinrichtung (9) verbunden ist, mit welcher mittels Förderer eine Dosierwasserpumpe (6), ein Bunker mit Zementdosieranlage (7) und ein Bunker mit Dosieranlage für hydrolysierenden Zuschlag (8) verbunden sind; die Homogenisierungseinrichtung (9) ist durch Förderer mit mindestens drei Sieben (10) verbunden, welche mit dem Trockner (11) verbunden sind, **dadurch gekennzeichnet, dass** die erste Walzenmühle mit Sieb (3) durch Förderer mit einer zweiten Walzenmühle mit Sieb (4) verbunden ist, welche ihrerseits durch Förderer mit einem Bunker mit Dosieranlage für Glasmehl (12) verbunden ist, der durch Förderer mit einer zweiten Homogenisierungseinrichtung (17) verbunden ist, mit welchem eine zweite Dosierwasserpumpe (13), ein Bunker mit Dosieranlage für Gips (14), ein zweiter Bunker mit Dosieranlage für Zement (15), ein zweiter Bunker mit Dosieranlage für hydrolysierenden Zuschlag (16) verbunden sind; die zweite Homogenisierungseinrichtung (17) ist mittels Förderer mit mindestens drei weiteren Sieben (18) verbunden, welche mit einem zweiten Trockner (19) verbunden sind.

## Revendications

1. **Ligne de production de plaques pour revêtement de sol intérieur et extérieur,** comprend une trémie de réception (1) reliée à un broyeur à marteaux (2), qui, au moyen de convoyeurs, est relié de manière bidirectionnelle au premier broyeur à cylindres avec tamis (3), lequel à son tour est relié par le biais d'un convoyeur à une trémie avec un distributeur de sable de verre (5), qui est relié par un convoyeur à un homogénéisateur (9) auquel par le biais des convoyeurs sont reliées une pompe doseuse à eau (6), une trémie avec un distributeur de ciment (7) et une trémie avec un distributeur pour additif imperméabilisant (8) ; l'homogénéisateur (9) étant relié par des convoyeurs à au moins trois tamis (10), reliés à un déshydrateur (11), **se caractérisant par le fait que** le premier broyeur à cylindres avec tamis (3) par l'intermédiaire d'un convoyeur est relié à un second broyeur à cylindres avec tamis (4 ), lequel à son tour est relié par le biais d'un convoyeur à une trémie avec un distributeur de poudre de verre (12) qui est relié par l'intermédiaire d'un convoyeur à un deuxième homogénéisateur (17) auquel sont reliées une deuxième pompe de distribution d'eau (13), une trémie avec un distributeur de plâtre (14), une deuxième trémie avec un distributeur de ciment (15), une deuxième trémie avec un distributeur pour additif imperméabilisant (16) ; le deuxième homogénéisateur (17) est relié par l'intermédiaire des convoyeurs à au moins trois autres tamis (18) reliés à un deuxième déshydrateur (19).
